# EUROPÄISCHE PATENTSCHRIFT

(11) **EP 0 968 234 B1**
(45) Veröffentlichungstag und Bekanntmachung des Hinweises auf die Patenterteilung: **10.05.2006**
(21) Anmeldenummer: 98913560.3
(22) Anmeldetag: 18.02.1998
(51) Int. Cl.: C08F 10/00, C08F 4/645

(54) **GETRÄGERTES KATALYSATORSYSTEM ZUR POLYMERISATION VON ALK-1-ENEN**
SUPPORTED CATALYST SYSTEM FOR POLYMERIZING ALK-1-ENES
SYSTEME CATALYSEUR SUPPORTE DESTINE A LA POLYMERISATION D'ALK-1-ENES

(30) Priorität: 11.03.1997 DE 19709866
(43) Veröffentlichungstag der Anmeldung: 05.01.2000
(73) Patentinhaber: Basell Polyolefine GmbH, 50389 Wesseling (DE)
(72) Erfinder: KRISTEN, Marc, Oliver, D-67117 Limburgerhof (DE); FISCHER, David, D-67725 Breunigweiler (DE)
(86) Internationale Anmeldenummer: PCT/EP1998/000929
(87) Internationale Veröffentlichungsnummer: WO 1998/040418

(56) Entgegenhaltungen:
- EP-A- 0 630 900
- EP-A- 0 683 179
- WO-A-92/01005
- WO-A-93/16116
- US-A- 5 534 473

## Beschreibung

Die vorliegende Erfindung betrifft Verfahren zur Herstellung von Katalysatorsystemen zur Polymerisation von C₂- bis C₁₂-Alk-1-enen, enthaltend
A) einen organischen oder anorganischen Träger,
B) mindestens einen Metallocenkomplex,
C) oligomere Aluminiumoxidverbindungen und
D) mindestens eine Borverbindung der allgemeinen Formel I 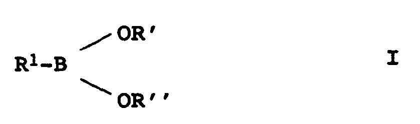 oder eine cyclische Borverbindung der allgemeinen Formel II 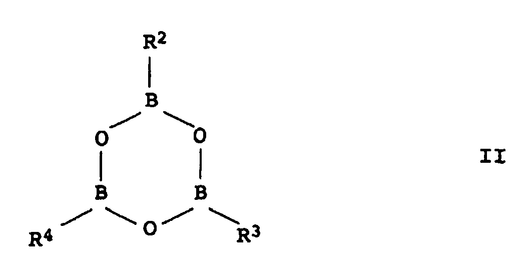 oder Mischungen aus Borverbindungen I und II,
wobei in den Formeln I und II die Substituenten folgende Bedeutung haben:
- R¹ bis R⁴: eine C₁- bis C₂₀-Alkylgruppe, die durch Halogen-atome, C₆- bis C₁₅-Arylgruppen und/oder C₁- bis C₁₀-Alkoxygruppen substituiert sein kann,
eine C₄- bis C₇-Cycloalkylgruppe, die durch Haloge-natome, C₁- bis C₁₀-Alkylgruppen und/oder C₁- bis C₁₀-Alkoxygruppen substituiert sein kann,
eine C₁- bis C₁₀-Alkoxy- oder Alkylsulfidgruppe, die durch Halogenatome, C₁- bis C₁₀-Alkylgruppen und/oder C₆- bis C₁₅-Arylgruppen substituiert sein kann,
eine C₆- bis C₁₅-Arylgruppe, die durch Halogena-tome, C₁- bis C₁₀-Alkylgruppen, C₁- bis C₁₀-Halogen-Alkylgruppen, C₄- bis C₁₀-Cycloalkylgruppen, C₆- bis C₁₅-Arylgruppen, C₁- bis C₁₀-Alkenylgruppen, Aminogruppen, Mono- oder Dialkylaminogruppen, Nitrogruppen, Formylgruppen, Acetamidogruppen und/ oder C₁- bis C₁₀-Alkoxygruppen substituiert sein kann oder
ein C₃- bis C₁₅-Heterocyclus, der im Ringsystem ein bis drei Sauerstoff-, Schwefel- und/oder Stickstoffatome enthält, und der durch Halogenatome, C₁- bis C₁₀-Alkylgruppen und/oder C₆- bis C₁₅-Arylgruppen substituiert sein kann,
R¹ bis R⁴ darüber hinaus wie vorausstehend definiert sind und zusätzlich eine bis drei weitere B(OR')(OR")-Gruppierungen tragen oder für den Fall, daß R¹ bis R⁴ einen aromatischen Ring enthalten, dieser Teil eines Metallocensystems ist,
- R' und R": gleich oder unterschiedlich sind und jeweils Wasserstoff oder eine C₁- bis C₁₀-Alkylgruppe bedeuten.

Um Metallocenkatalysatoren für die Polymerisation von Alk-1-enen in Suspensions- oder Gasphasenverfahren einsetzen zu können, müssen diese in geträgerter Form vorliegen. Methoden zur Trägerung von Metallocenen, die mit oligomeren Aluminiumoxidverbindungen wie beispielsweise Methylalumoxan (MAO) aktiviert werden, sind z.B. in der EP-A 206 794, EP-A 250 600 und der WO 95/07939 beschrieben.

Geträgerte Katalysatorsysteme, die auf diese Weise erhalten werden, können in Suspensions- (DE-A 43 44 672) oder Gasphasenverfahren (EP-A 323 716) eingesetzt werden. Um hohe Produktivitäten zu gewährleisten, weisen diese Katalysatorsysteme jedoch einen sehr hohen Gehalt an teurem Methylalumoxan auf. Neben diesem wirtschaftlich Nachteil führen hohe Methylalumoxangehalte zu hohen Aluminiumrestgehalten in den Polymerprodukten, was sich bei der Verarbeitung nachteilig auswirken kann, bzw. zu aufwendigen Reinigungsschritten am Polymeren zwingt.

In WO 93/16116 wird die Verwendung von cyclischen Bor-SauerstoffVerbindungen als Zusatz bei der Lösungspolymerisation von Propylen beschrieben. Durch den Zusatz dieser Verbindungen konnte die Aktivität des Metallocen/MAO-Katalysatorsystems verdreifacht werden.

US-A 5 534 473 offenbart Katalysatorsysteme aus mindestens einem Metallocenkomplex und Cokatalysatoren, die oligomere Aluminiumoxidverbindungen und organische Borverbindungen enthalten. Diese Cokatalysatoren werden durch Zusammenbringen der Aluminiumoxidverbindungen und der Borverbindungen erhalten, wobei die Umsetzung auch in Gegenwart eines Trägers erfolgen kann.

Die Herstellung eines festen Cokatalysators durch Umsetzung einer Alumoxanverbindung und eines Boroxins wird in der EP-A 612 753 und der US-A 5 411 925 beschrieben. In der US-A 5 480 848 wird die Darstellung eines ähnlichen festen Cokatalysators durch Reaktion eines Alumoxans mit einer Organoborverbindung, die kein azides H-Atom besitzt, gelehrt. Boroxinhaltige Cokatalysatoren werden außerdem in der EP-A 683 179 beschrieben. Weiter können auch Boronsäuren zur Herstellung analoger Cokatalysatoren verwendet werden (US-A 5 414 180 und US-A 5 449 650).

Aus diesen Schriften ist jedoch nichts über die Polymerisation mit Katalysatorsystemen bekannt, die auf einem inerten Material geträgert sind. Die Eigenschaften geträgerter Katalysatorsysteme weichen jedoch sehr häufig von den Systemen in Lösung ab, wie dem Fachmann bekannt ist. Aber gerade durch die Wahl eines geeigneten Trägermaterials läßt sich die Morphologie des erzeugten Polymerisats exakt einstellen, was einen großen Vorteil bei der Verwendung dieser Katalysatorsysteme in Particle-Forming-Prozessen wie z.B. Suspension- und Gasphasenverfahren darstellt.

Der vorliegenden Erfindung lag daher die Aufgabe zugrunde, ein Verfahren zur Herstellung eines auf einem inerten Material geträgerten Katalysatorsystems zur Polymerisation von Alk-1-enen zu entwickeln, das eine hohe Produktivität besitzt, kein Reaktorfouling, d.h. keine Beläge an Rührer und Reaktorwänden, verursacht und Polymerisate mit einer guten Morphologie liefert.

Demgemäß wurde ein Verfahren zur Herstellung von Katalysatorsystemen zur Polymerisaten von C₂- bis C₁₂-Alk-1-enen entsprechend der eingangs gegebenen Definition gefunden, das dadurch gekennzeichnet ist, daß man zunächst die Komponenten A), B) und C) zusammengibt, und dann die Borverbindung(en) D) der allgemeinen Formeln I oder II oder eine Mischung aus I oder II zufügt.

Die erfindungsgemäß hergestellten Katalysatorsysteme enthalten als Komponente A) einen organischen oder anorganischen Träger. Als Trägermaterialien werden vorzugsweise feinteilige Träger eingesetzt, die einen Teilchendurchmesser im Bereich von
0,1 bis 1000 µm aufweisen, bevorzugt von 10 bis 300 µm, insbesondere von 30 bis 70 µm. Geeignete organische Träger sind beispielsweise feinteilige Polymerisate, z.B. feinteiliges Polyethylen oder feinteiliges Polypropylen. Als anorganische Träger sind z.B. Aluminiumoxid, Siliziumdioxid, Titandioxid oder deren Mischoxide, Aluminiumphosphat oder Magnesiumchlorid geeignet. Bevorzugt kommen Kieselgele der Formel SiO₂ · a Al₂O₃ zum Einsatz, worin a für eine Zahl im Bereich von 0 bis 2, vorzugsweise 0 bis 0,5, steht. Die Trägerpartikel können in granulärer Form sowie sprühgetrocknet in mikroskopischer Form verwendet werden. Derartige Produkte sind im Handel erhältlich, z.B. Silica Gel 332 der Fa. Grace oder ES 70 X der Fa. Crosfield.

Die Menge an Träger, d.h. an Komponente A), beträgt vorzugsweise 50 bis 99,9 Gew.-% bezogen auf Metallocenkomplex, d.h. auf Komponente B).

Als Komponente B) enthalten die erfindungsgemäß hergestellten Katalysatorsysteme einen oder mehrere Metallocenkomplexe. Hierbei eignen sich besonders solche der allgemeinen Formel III 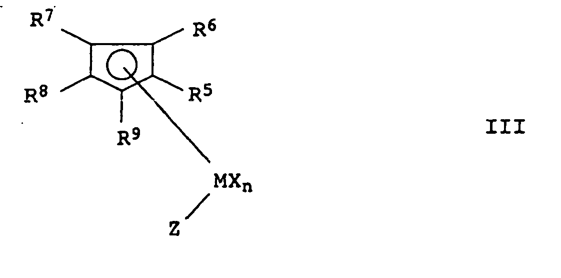 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: 1, 2 oder 3, wobei n der Wertigkeit von M minus der Zahl 2 entspricht,
wobei
- R¹⁰ und R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁵ bis R⁹: Wasserstoff, C₁- bis C₁₀-Alkyl, 5- bis 7-gliedriges Cycloalkyl, das seinerseits durch C₁- bis C₁₀-Alkyl substituiert sein kann, C₆- bis C₁₅-Aryl oder Arylalkyl, wobei auch zwei benachbarte Reste gemeinsam für 4 bis 15 C-Atome aufweisende gesättigte oder ungesättigte cyclische Gruppen stehen können, oder Si(R¹²)₃ mit
- R¹²: C₁- bis C₁₀-Alkyl, C₃- bis C₁₀-Cycloalkyl oder C₆- bis C₁₅-Aryl sein kann und
- Z: für X oder 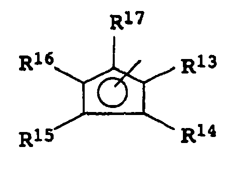 steht,
wobei die Reste
- R¹³ bis R¹⁷: Wasserstoff, C₁- bis C₁₀-Alkyl, 5- bis 7gliedriges Cycloalkyl, das seinerseits durch C₁- bis C₁₀-Alkyl substituiert sein kann, C₆- bis C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R¹⁸)₃ mit
- R¹⁸: C₁- bis C₁₀-Alkyl, C₆- bis C₁₅-Aryl oder C₃- bis C₁₀-Cycloalkyl bedeuten,
oder wobei die Reste R⁸ und Z gemeinsam eine Gruppierung -R¹⁹-A-bilden, in der
- R¹⁹: 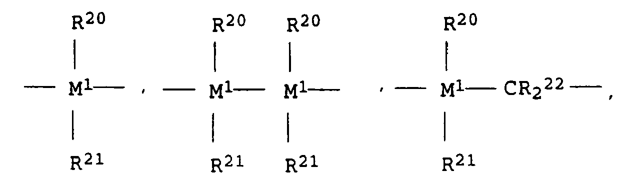 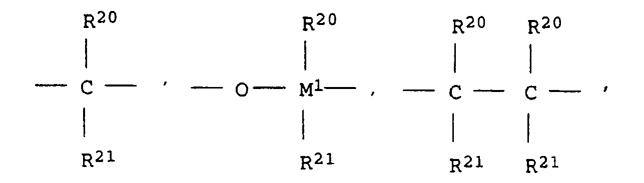 = BR²⁰, = AlR²⁰, -Ge-, -Sn-, -O-, -S-, = SO, = SO₂,
= NR²⁰, = CO, = PR²⁰ oder = P (O) R²⁰ ist,
wobei
- R²⁰, R²¹ und R²²: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M¹: Silicium, Germanium oder Zinn ist,
- A: -O-, -S- , 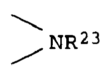 oder 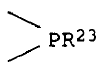 bedeuten,
mit
- R²³: C₁- bis C₁₀-Alkyl, C₆- bis C₁₅-Aryl,
C₃- bis C₁₀-Cycloalkyl, C₇- bis C₁₈-Alkylaryl oder Si(R²⁴)₃,
- R²⁴: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁸ und R¹⁶ gemeinsam eine Gruppierung -R¹⁹⁻bilden.

Von den Metallocenkomplexen der allgemeinen Formel III sind 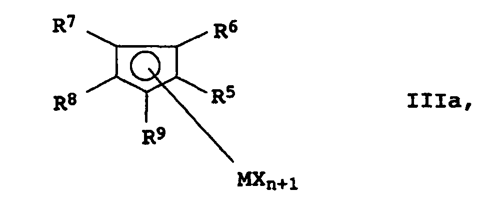 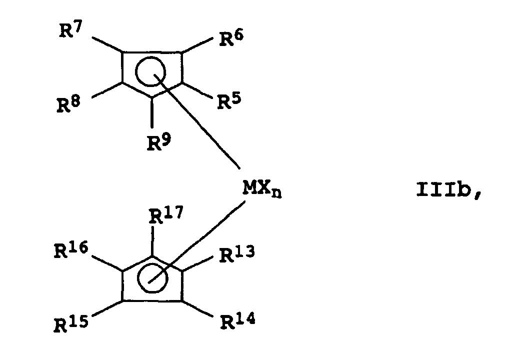 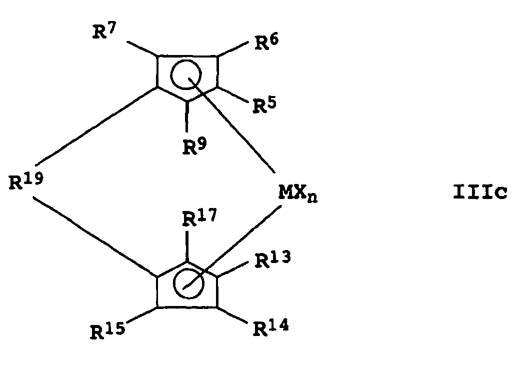 und 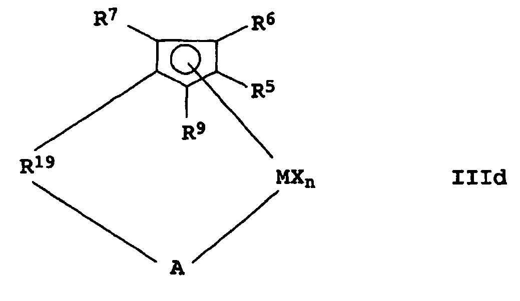 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, zirkonium oder Hafnium,
- X: Chlor, C₁-bis C₄-Alkyl oder Phenyl,
- n: die Zahl 2 und
- R⁵ bis R⁹: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: Chlor, C₁-bis C₄-Alkyl oder Phenyl,
- n: die Zahl 2,
- R⁵ bis R⁹: Wasserstoff, C₁- bis C₄-Alkyl oder Si(R¹²)₃,
- R¹³ bis R¹⁷: Wasserstoff, C₁- bis C₄-Alkyl oder Si(R¹⁸)₃ bedeuten.

Insbesondere sind die Verbindungen der Formel IIIb geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel IIIc sind diejenigen besonders geeignet, in denen
- R⁵ und R¹³: gleich sind und für Wasserstoff oder C₁- bis C₁₀-Alkylgruppen stehen,
- R⁹ und R¹⁷: gleich sind und für Wasserstoff, eine Methyl-, Ethyl-, iso-Propyl- oder tert.-Butylgruppe stehen,
- R⁷ und R¹⁵: C₁- bis C₄-Alkyl und
- R⁶ und R¹⁴: Wasserstoff bedeuten oder
zwei benachbarte Reste R⁶ und R⁷ sowie R¹⁴ und R¹⁵ gemeinsam für 4 bis 12 C-Atome aufweisende gesättigte oder ungesättigte cyclische Gruppen stehen,
- R¹⁹: für 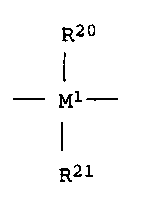 oder 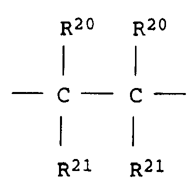 steht,
M für Titan, Zirkonium oder Hafnium und
X für Chlor, C₁- bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Diphenylsilandiylbis(-2-methylindenyl)-hafniumdichlorid
sowie die entsprechenden Dimethylzirkoniumverbindungen.

Weitere Beispiele für geeignete Komplexverbindungen sind u.a.
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid und
Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel IIId sind als besonders geeignet diejenigen zu nennen, in denen
- M: für Titan oder Zirkonium,
- X: für Chlor, C₁-bis C₄-Alkyl oder Phenyl stehen.

- R¹⁹: für 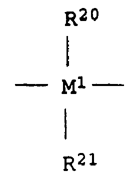 oder 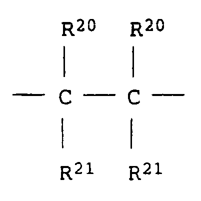 steht,
- A: für ―O―, ―S―, 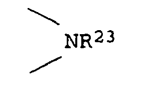
- und:
- R⁵ bis R⁷ und R⁹: für Wasserstoff, C₁- bis C₁₀-Alkyl, C₃- bis C₁₀-Cycloalkyl, C₆- bis C₁₅-Aryl oder Si(R¹²)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthalten die erfindungsgemäß hergestellten Katalysatorsysteme oligomere Aluminiumoxidverbindungen. Geeignet sind beispielsweise offenkettige oder cyclische Alumoxanverbindungen der allgemeinen Formel IV oder V 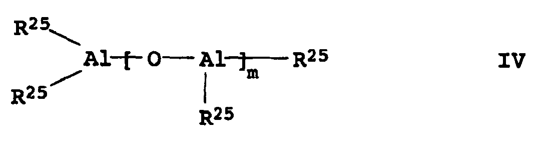 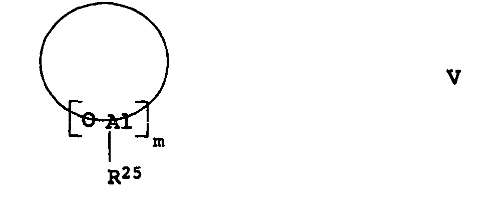 wobei
- R²⁵: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente B) als auch die oligomeren Aluminiumoxidverbindungen (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Komponente C) anstelle der Alumoxanverbindungen der allgemeinen Formeln IV oder V Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe B) und die oligomeren Aluminiumoxidverbindungen in solchen Mengen zu verwenden, daß das atomare Verhältnis zwischen Aluminium aus den oligomeren Aluminiumoxidverbindungen C) und dem Übergangsmetall aus den Metallocenkomplexen B) im Bereich von 10:1 bis 10⁶:1, insbesondere im Bereich von 10:1 bis 10⁴:1, liegt.

Darüber hinaus enthalten die erfindungsgemäß hergestellten Katalysatorsysteme als Komponente D) noch mindestens eine Borverbindung der allgemeinen Formel I 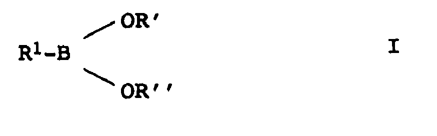 oder eine cyclische Borverbindung der allgemeinen Formel II 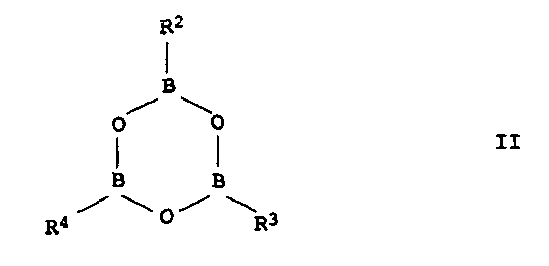 oder Mischungen aus Borverbindungen I und II,
wobei in den Formeln I und II die Substituenten folgende Bedeutung haben:
- R¹ bis R⁴: eine verzweigte oder vorzugsweise lineare C₁- bis C₂₀-Alkylgruppe, insbesondere Methyl- und Ethylgruppe, die z.B. ein- bis dreifach durch Halogenatome, insbesondere Fluor und Chlor, C₆- bis C₁₅-Arylgruppen, vorzugsweise Phenylgruppen und/oder C₁- bis C₁₀-Alkoxygruppen, vorzugsweise C₁- bis C₄-Alkoxygruppen substituiert sein kann,
eine C₄- bis C₇-Cycloalkylgruppe, bevorzugt C₅- bis C₆-Cycloalkylgruppe, die z.B. ein- bis dreifach durch Halogenatome, insbesondere Fluor und Chlor, verzweigte oder vorzugsweise lineare C₁- bis C₁₀-Alkylgruppen, bevorzugt C₁- bis C₄-Alkylgruppen und/oder verzweigte oder vorzugsweise lineare Alkoxygruppen mit 1 bis 10 C-Atomen, insbesondere mit 1 bis 4 C-Atomen substituiert sein kann,
eine verzweigte oder vorzugsweise lineare Alkoxy- oder Alkylsulfidgruppe mit 1 bis 10 C-Atomen, bevorzugt mit 1 bis 4 C-Atomen, die z.B. ein- bis dreifach durch Halogenatome, insbesondere Fluor und Chlor, verzweigte oder vorzugsweise lineare C₁- bis C₁₀-Alkylgruppen, bevorzugt C₁- bis C₄-Alkylgruppen und/oder C₆- bis C₁₅-Arylgruppen, vorzugsweise Phenylgruppen substituiert sein kann,
eine C₆- bis C₁₅-Arylgruppe, bevorzugt Phenyl, die z.B. ein- bis fünffach durch Halogenatome, bevorzugt Fluor und Chlor, verzweigte oder vorzugsweise lineare C₁- bis C₁₀-Alkylgruppen, insbesondere C₁- bis C₄-Alkylgruppen, verzweigte oder vorzugsweise lineare C₁- bis C₁₀-Alkylgruppen, insbesondere C₁- bis C₄-Alkylgruppen, die z.B. ein- bis fünffach durch Halogenatome, bevorzugt Fluor und Chlor, substituiert sind, verzweigte oder vorzugsweise lineare C₁- bis C₁₀-Alkylgruppen, insbesondere C₁- bis C₄-Alkylgruppen, die z.B. ein bis drei Doppelbindungen enthalten, Aminogruppen, ein- oder zweifach durch verzweigte oder vorzugsweise lineare C₁- bis C₁₀-Alkylgruppen, insbesondere C₁- bis C₄-Alkylgruppen, substituierte Aminogruppen, Nitrogruppen, Formylgruppen, Acetamidogruppen und/oder verzweigte oder vorzugsweise lineare Alkoxygruppen mit 1 bis 10 C-Atomen, insbesondere mit 1 bis 4 C-Atomen substituiert sein kann, oder
ein gesättigter oder ungesättigter C₃- bis C₁₅-Heterocyclus, der im Ringsystem ein bis drei Sauerstoff-, Schwefel- und/oder Stickstoffatome enthält, bevorzugt Furan, Thiophen, Pyridin, Pyrimidin oder Pyrazin, der z.B. ein- bis fünffach durch Halogenatome, insbesondere Fluor und Chlor, C₆- bis C₁₅-Arylgruppen, vorzugsweise Phenylgruppen, weitere C₃- bis C₁₅-Heterocyclen mit ein bis drei Sauerstoff-, Schwefel- und/oder Stickstoffatome im Ringsystem, die wiederum substiuiert sein können, und/oder verzweigte oder vorzugsweise lineare C₁- bis C₁₀-Alkylgruppen, bevorzugt C₁- bis C₄-Alkylgruppen substituiert sein kann, wobei jeweils zwei Alkyl- oder Arylsubstituenten mit den sie verbindenden Atomen einen 4 bis 15 C-Atome aufweisenden gesättigten oder ungesättigten Ring bilden können,
R¹ bis R⁴ darüber hinaus wie vorausstehend definiert sind und zusätzlich eine bis drei weitere B(OR')(OR")-Gruppierungen tragen, wobei R¹ bis R⁴ dann bevorzugt ein Phenyl oder Biphenyl sind, oder für den Fall, daß R¹ bis R⁴ einen aromatischen Ring enthalten, dieser Teil eines Metallocensystems, beispielsweise eines Ferrocensystems, ist,
- R' und R": gleich oder unterschiedlich sind und jeweils Wasserstoff oder eine verzweigte oder vorzugsweise lineare C₁- bis C₁₀-Alkylgruppe, bevorzugt mit 1 bis 4 C-Atomen, bedeuten.

Bevorzugt sind jeweils die unsubstituierten Verbindungen, insbesondere stehen R¹ bis R⁴ für unsubstituierte lineare C₁- bis C₄-Alkyl- oder C₆- bis C₁₀-Arylgruppen.

Bei den Borverbindung der allgemeinen Formel I sind Methylboronsäure. Ethylboronsäure und Benzolboronsäure besonders bevorzugt. Anstelle der freien Säure können aber auch die Alkylester mit 1 bis 10 C-Atomen, insbesondere 1 bis 4 C-Atomen verwendet werden.

Bei den cyclischen Borverbindungen der allgemeinen Formel II haben sich Verbindungen, in denen alle drei Reste R², R³ und R⁴ die gleiche Bedeutung haben, als besonders geeignet erwiesen, wobei insbesondere Trimethylboroxin, Triethylboroxin und Triphenylboroxin bevorzugt sind.

Die Herstellung cyclischer Borverbindungen der allgemeinen Formel II ist dem Fachmann an sich bekannt und kann z.B. durch Umsetzung von Boroxid mit Trialkylboranen erfolgen, wie beispielsweise aus der US-A 5 001 244 bekannt.

Mischungen verschiedener Borverbindungen der allgemeinen Formeln I und/oder II können ebenfalls eingesetzt werden.

Das atomare Verhältnis zwischen Bor aus den Borverbindungen D) und dem Aluminium aus den oligomeren Aluminiumoxidverbindungen C) kann im Bereich von 10⁻⁴:1 bis 1:1, bevorzugt im Bereich von 10⁻²:1 bis 1:1, insbesondere im Bereich von 0,05:1 bis 0,2:1 liegen.

Die erfindungsgemäß hergestellten Katalysatorsysteme können als weitere Komponente E) gegebenenfalls noch eine Metallverbindung der allgemeinen Formel VI

M² (R²⁶)ᵣ (R²⁷)ₛ (R²⁸)ₜ VI

in der
- M²: ein Alkali-, ein Erdalkalimetall oder ein Metall der III. Hauptgruppe des Periodensystems, d.h. Bor, Aluminium, Gallium, Indium oder Thallium bedeutet,
- R²⁶: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R²⁷ und R²⁸: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
- und:
- s und t: ganze Zahlen von 0 bis 2 bedeuten, wobei die Summe r+s+t der Wertigkeit von M² entspricht,
enthalten.

Von den Metallverbindungen der allgemeinen Formel VI sind diejenigen bevorzugt, in denen
- M²: Lithium, Magnesium oder Aluminium bedeutet und
- R²⁶ bis R²⁸: für C₁- bis C₁₀-Alkyl stehen.

Besonders bevorzugte Metallverbindungen der Formel VI sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente E) eingesetzt wird, ist sie bevorzugt in einer Menge von 800:1 bis 1:1, insbesondere 500:1 bis 50:1 (molares Verhältnis von M² aus VI zu Übergangsmetall M aus III) im Katalysatorsystem enthalten.

Die Komponenten A), B), C), D) und gegebenenfalls E) werden zusammen als erfindungsgemäßes Katalysatorsystem verwendet. Üblicherweise wird zunächst aus den Komponenten A), B), C) und D) ein Katalysatorfeststoff hergestellt und die gegebenenfalls eingesetzte Komponente E) wird erst bei der Polymerisation zugesetzt.

Bei der Katalysatorsynthese können die Komponenten einzeln oder als Gemisch zugegeben werden. Es werden jedoch zunächst die Komponenten A), B) und C) zusammengegeben und dann erst D) zugefügt, d.h. die Borverbindungen D) werden zu einem bereits auf einen Träger A) aufgebrachten und mit Aluminiumoxiverbindungen C) aktivierten Metallocenkomplex B) gegeben.

Die erfindungsgemäß hergestellten Katalysatorsysteme werden zur Polymerisation oder Copolymerisation von C₂- bis C₁₂-Alk-1-enen eingesetzt. Als C₂- bis C₁₂-Alk-1-ene sind Ethylen, Propylen, But-1-en, Pent-1-en, 4-Methyl-pent-1-en, Hex-1-en, Hept-1-en oder Oct-1-en sowie vinylaromatische Monomere wie Styrol, p-Methylst;r-rol oder 2,4-Dimethylstyrol oder Gemische aus diesen C₂- bis C₁₂-Alk-1-enen bevorzugt. Besonders bevorzugt sind Homo- oder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten.

vorzugsweise werden mit den erfindungsgemäß hergestellten Katalysatorsystemen solche Polymerisate hergestellt, die
50 bis 100 Mol-% Ethylen und
0 bis 50 Mol-%, insbesondere 0 bis 30 Mol-% C₃- bis C₁₂-Alk-1-ene
enthalten.

Bevorzugt sind auch solche Polymerisate, die
50 bis 100 Mol-% Propylen,
0 bis 50 Mol-%, insbesondere 0 bis 30 Mol-% Ethylen und
0 bis 20 Mol-%, insbesondere 0 bis 10 Mol-% C₄- bis C₁₂-Alk-1-ene
aufweisen.

Die Summe der Mol-% ergibt stets 100.

Die Polymerisation kann in den für die Polymerisation von Olefinen üblichen Verfahren, wie Lösungsverfahren, Suspensionsverfahren, gerührtes Gasphasenverfahren oder Gasphasenwirbelschichtverfahren, kontinuierlich oder auch diskontinuierlich durchgeführt werden. Als Lösungsmittel oder Suspensionsmittel können inerte Kohlenwasserstoffe, wie beispielsweise iso-Butan, oder aber die Monomeren selbst verwendet werden. Besonders gut geeignete Verfahren zur Herstellung der Polymerisate sind das Suspensionsverfahren und die Gasphasenverfahren.

Geeignete Reaktoren sind u.a. kontinuierlich betriebene Rührkessel, Schleifenreaktoren oder Wirbelbettreaktoren, wobei man gegebenenfalls auch eine Reihe von mehreren hintereinander geschalteten Reaktoren verwenden kann (Reaktorkaskade).

Die Polymerisation mit Hilfe der erfindungsgemäß hergestellten Katalysatorsysteme wird bei Temperaturen im Bereich von -50 bis 300°C, vorzugsweise im Bereich von 0 bis 150°C, und bei Drücken im Bereich von 0,5 bis 3000 bar, vorzugsweise im Bereich von 1 bis 80 bar, durchgeführt. Bei den erfindungsgemäßen Polymerisationsverfahren ist es vorteilhaft, die Verweilzeiten der jeweiligen Reaktionsgemische auf 0,5 bis 5 Stunden, insbesondere auf 0,7 bis 3,5 Stunden, einzustellen. Es können bei der mische auf 0,5 bis 5 Stunden, insbesondere auf 0,7 bis 3,5 Stunden, einzustellen. Es können bei der Polymerisation u.a. auch Antistatika sowie Molmassenregler, beispielsweise Wasserstoff, mitverwendet werden.

Die erfindungsgemäßen Katalysatorsysteme zeichnen sich durch eine hohe Produktivität aus und verursachen bei der Polymerisation weder Beläge noch Brocken im Reaktor. Außerdem besitzen die so hergestellten Polymerisate eine ausgezeichnete Morphologie.

Die erhaltenen Polymerisate oder Copolymerisate von C₂- bis C₁₂-Alk-1-enen weisen einen niedrigen Gehalt an Aluminium und Chlor auf. Sie eignen sich insbesondere zur Herstellung von Fasern, Folien und Formkörpern.

### Beispiele

Alle Katalysatorsynthesen wurden unter dem Ausschluß von Luft und Feuchtigkeit unter einer Inertgasatmosphäre durchgeführt.

Die Bestimmung des η-Wertes erfolgte nach ISO 1628-3.

Die Dichte wurde nach DIN ISO 1183 bestimmt.

### Katalysatorsynthesen

### Vergleichsbeispiel 1

In einem 500 ml Vierhalskolben wurden 213,3 ml MAO (1,53 M Lösung in Heptan, Fa. Witco) vorgelegt. Nach Zugabe von 3,41 g Triphenylboroxin wurde für 30 min gerührt. Anschließend wurden 0,33 g Bis(n-butylcyclopentadienyl)zirkoniumdichlorid dazu gegeben und die Reaktionslösung für 15 min gerührt. Es wurden 32,4 g Kieselgel (ES 70 X, Fa. Crosfield) zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 48,8 g.

### Vergleichsbeispiel 2

In einem 500 ml Vierhalskolben wurden 226,5 ml MAO (1,53 M Lösung in Heptan, Fa. Witco) und 0,35 g Bis(n-butylcyclopentadienyl)zirkoniumdichlorid vorgelegt und für 15 min gerührt. Nach Zugabe von 3,61 g Triphenylboroxin wurde für 30 min gerührt Anschließend wurden 34,7 g Kieselgel (ES 70 X, Fa. Crosfield) zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 49,4 g.

### Beispiel 3

In einem 500 ml Vierhalskolben wurden 194,4 ml MAO (1,53 M Lösung in Heptan, Fa. Witco) und 0,30 g Bis(n-butylcyclopentadienyl)zirkoniumdichlorid vorgelegt und für 15 min gerührt. Anschließend wurden 29,6 g Kieselgel (ES 70 X, Fa. Crosfield) zugefügt, und das Reaktionsgemisch für 30 min gerührt. Es wurden 3,1 g Triphenylboroxin zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 40,4 g.

### Beispiel 4

In einem 500 ml Vierhalskolben wurden 222,1 ml MAO (1,53 M Lösung in Heptan, Fa. Witco) und 0,34 g Bis(n-butylcyclopentadienyl)zirkoniumdichlorid vorgelegt und für 15 min gerührt. Anschließend wurden 26,3 g Kieselgel (ES 70 X, Fa. Crosfield) zugefügt, und das Reaktionsgemisch für 30 min gerührt. Es wurden 1,58 ml (1,42 g) Trimethylboroxin zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 32,5 g.

### Beispiel 5

In einem 500 ml Vierhalskolben wurden 172,5 ml MAO (1,53 M Lösung in Heptan, Fa. Witco) und 0,27 g Bis(n-butylcyclopentadienyl)zirkoniumdichlorid vorgelegt und für 15 min gerührt. Anschließend wurden 34,0 g Kieselgel (ES 70 X, Fa. Crosfield) zugefügt, und das Reaktionsgemisch für 30 min gerührt. Es wurden 3,2 g Benzolboronsäure zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 43,2 g.

### Vergleichsbeispiel A

Es wurde ein Katalysator ohne den Zusatz von Borverbindung D) hergestellt. Dazu wurden in einem 500 ml Vierhalskolben 129,4 ml MAO (1,53 M Lösung in Heptan, Fa. Witco) und 0,20 g Bis(n-butylcyclopentadienyl)zirkoniumdichlorid vorgelegt und für 15 min gerührt. Anschließend wurden 25,5 g Kieselgel (ES 70 X, Fa. Crosfield) zugefügt. Die Katalysatorsuspension wurde für 30 min gerührt und dann abfiltriert. Nach dem Waschen des Rückstands mit 2 x 250 ml Heptan wurde dieser im Vakuum getrocknet. Ausbeute: 30,1 g.

### Polymerisation

### Beispiele 6 bis 12

In einem gerührten 10-1-Stahlautoklaven wurden nach sorgfältigem Spülen mit Stickstoff und Temperieren auf die Polymerisationstemperatur von 70°C 4.5 1 iso-Butan, 80 mg n-Butyl-Lithium und im Falle der Copolymerisationen zusätzlich 400 ml Buten vorgelegt. Dann wurden die in der nachfolgenden Tabelle angegebene Menge eines in den Beispielen bzw. Vergleichsbeispielen 1 bis 5 hergestellten geträgerten Katalysators mit weiteren 0,5 1 iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Es wurden jeweils die in der nachfolgenden Tabelle angegebene Menge an Polymerisat jeweils in Form eines gut rieselfähigen Grießes erhalten. Die analytischen Daten sind ebenfalls in der nachfolgenden Tabelle aufgeführt.

### Beispiele B und C

Es wurde anlog den Beispiele 6 bis 12 polymerisiert, jedoch wurde der im Vergleichsbeispiel A hergestellte geträgerte Katalysator verwendet. Die eingesetzten Katalysatormengen und die analytischen Daten sind ebenfalls in der nachfolgenden Tabelle aufgeführt.

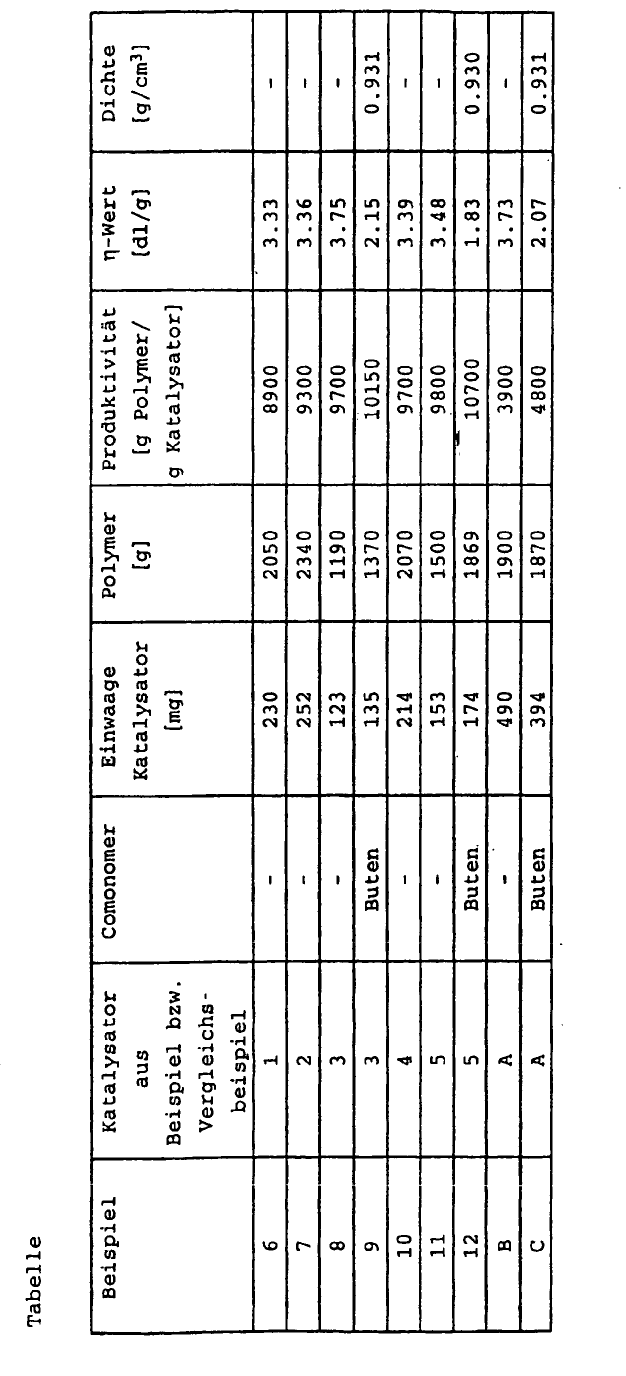

Aus der Tabelle geht u.a. hervor, daß in den Beispielen 6 bis 12 mit den Katalysatoren aus den Beispielen bzw. Vergleichsbeispielen 1 bis 5 deutlich höhere Produktivitäten erzielt werden als in den Beispielen B und C, in denen der im Vergleichsbeispiel A synthetisierte Katalysator eingesetzt wurde. Besonders gute Produktivitäten werden erreicht (Beispiele 8 - 12), wenn bei der Katalysatorsynthese wie in den erfindungs gemäßen Beispielen 3 bis 5 die Borverbindungen D) zu bereits auf einem Träger A) aufgebrachten und mit Aluminiumoxiverbindungen C) aktivierten Metallocenkomplex B) gegeben wird.

Die Tabelle zeigt auch, daß durch den erfindungsgemäßen Einsatz der Borverbindungen D) die Molmasse des gebildeten Polymerisats nur sehr wenig bis überhaupt nicht verringert wird. (Der η-Wert fällt nicht oder nur geringfügig ab.)

## Patentansprüche

1. Verfahren zur Herstellung von Katalysatorsystemen zur Polymerisation von C₂- bis C₁₂-Alk-1-enen, enthaltend
A) einen organischen oder anorganischen Träger,
B) mindestens einen Metallocenkomplex,
C) oligomere Aluminiumoxidverbindungen und
D) mindestens eine Borverbindung der allgemeinen Formel I 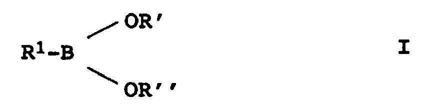 oder eine cyclische Borverbindung der allgemeinen Formel II 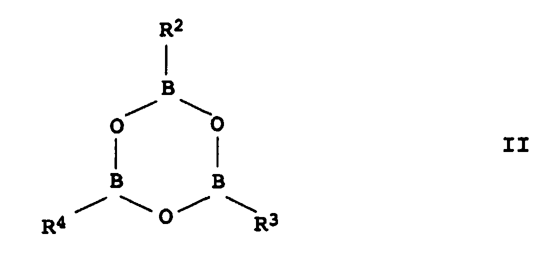 oder Mischungen aus Borverbindungen I und II,
wobei in den Formeln I und II die Substituenten folgende Bedeutung haben:
R¹ bis R⁴ eine C₁- bis C₂₀-Alkylgruppe, die durch Halogenatome, C₆- bis C₁₅-Arylgruppen und/oder C₁- bis C₁₀-Alkoxygruppen substituiert sein kann,
eine C₄- bis C₇-Cycloalkylgruppe, die durch Halogenatome, C₁- bis C₁₀-Alkylgruppen und/oder C₁- bis C₁₀-Alkoxygruppen substituiert sein kann,
eine C₁- bis C₁₀-Alkoxy- oder Alkylsulfidgruppe, die durch Halogenatome, C₁- bis C₁₀-Alkylgruppen und/oder C₆- bis C₁₅-Arylgruppen substituiert sein kann,
eine C₆- bis C₁₅-Arylgruppe, die durch Halogenatome, C₁- bis C₁₀-Alkylgruppen, C₁- bis C₁₀-Halogen-Alkylgruppen, C₄- bis C₁₀-Cycloalkylgruppen, C₆- bis C₁₅-Arylgruppen, C₁- bis C₁₀-Alkenylgruppen, Aminogruppen, Mono- oder Dialkylaminogruppen, Nitrogruppen, Formylgruppen, Acetamidogruppen und/oder C₁- bis C₁₀-Alkoxygruppen substituiert sein kann oder
ein gesättigter oder ungesättigter C₃- bis C₁₅-Heterocyclus, der im Ringsystem ein bis drei Sauerstoff-, Schwefel- und/oder Stickstoffatome enthält, und der durch Halogenatome, C₆- bis C₁₅-Arylgruppen, weitere C₃- bis C₁₅-Heterocyclen und/oder C₁- bis C₁₀-Alkylgruppen substituiert sein kann,
R¹ bis R⁴ darüber hinaus wie vorausstehend definiert sind und zusätzlich eine bis drei weitere B(OR') (OR")-Gruppierungen tragen oder für den Fall, daß R¹ bis R⁴ einen aromatischen Ring enthalten, dieser Teil eines Metallocensystems ist,
R' und R" gleich oder unterschiedlich sind und jeweils Wasserstoff oder eine C₁- bis C₁₀-Alkylgruppe bedeuten,
**dadurch gekennzeichnet, daß** man zunächst die Komponenten A), B) und C) zusammengibt, und dann die Borverbindung(en) D) der allgemeinen Formeln I oder II oder eine Mischung aus I oder II zufügt.

2. Verfahren zur Herstellung von Katalysatorsystemen nach Anspruch 1, wobei als Träger A) ein Oxid des Siliciums, des Aluminiums, des Titans oder ein Oxid eines Metalls der I. bzw. der II. Hauptgruppe des Periodensystems eingesetzt wird.

3. Verfahren zur Herstellung von Katalysatorsystemen nach Anspruch 2, wobei als Träger A) Kieselgel (SiO₂) eingesetzt wird.

4. Verfahren zur Herstellung von Katalysatorsystemen nach den Ansprüchen 1 bis 3, wobei als Metallocenkomplex B) ein Metallocenkomplex der allgemeinen Formel III eingesetzt wird, 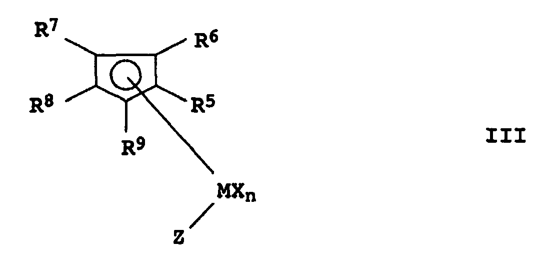 in der die Substituenten folgende Bedeutung haben:
M Titan, Zirkonium, Hafnium, Vanadium, Niob oder Tantal, sowie Elemente der III. Nebengruppe des Periodensystems und der Lanthanoiden,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
n 1, 2 oder 3, wobei n der Wertigkeit von M minus der Zahl 2 entspricht,
wobei
R¹⁰ und R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R⁵ bis R⁹ Wasserstoff, C₁- bis C₁₀-Alkyl, 5- bis 7-gliedriges Cycloalkyl, das seinerseits durch C₁- bis C₁₀-Alkyl substituiert sein kann, C₆- bis C₁₅-Aryl oder -Arylalkyl, wobei auch zwei benach- barte Reste gemeinsam für 4 bis 15 C-Atome aufweisende gesättigte oder ungesättigte cyclische Gruppen stehen können, oder Si(R¹²)₃ mit
R¹² C₁- bis C₁₀-Alkyl, C₃- bis C₁₀-Cycloalkyl oder C₆- bis C₁₅-Aryl sein kann und
Z für X oder 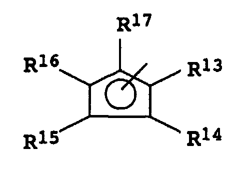 steht,
wobei die Reste
R¹³ bis R¹⁷ Wasserstoff, C₁- bis C₁₀-Alkyl, 5- bis 7-gliedriges Cycloalkyl, das seinerseits durch C₁- bis C₁₀-Alkyl substituiert sein kann, C₆- bis C₁₅-Aryl oder -Arylalkyl bedeuten und wobei auch zwei benachbarte Reste gemeinsam für 4 bis 15 C-Atome aufweisende gesättigte oder ungesättigte cyclische Gruppen stehen können, oder Si(R¹⁸)₃ mit
R¹⁸ C₁- bis C₁₀-Alkyl, C₆- bis C₁₅-Aryl oder C₃- bis C₁₀-Cycloalkyl bedeuten,
oder wobei die Reste R⁸ und Z gemeinsam eine Gruppierung -R¹⁹-A- bilden, in der
R¹⁹ 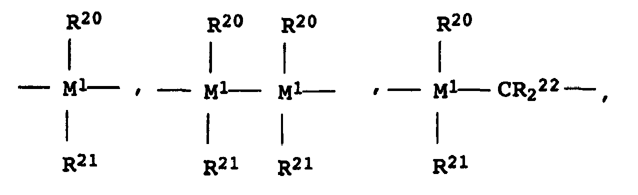 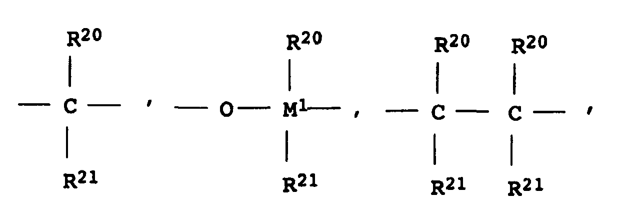 = BR²⁰, = AlR²⁰, -Ge-, -Sn-, -O-, -S-, = SO,
= SO₂, = NR²⁰, = CO, = PR²⁰ oder = P(O)R²⁰ ist,
wobei
R²⁰, R²¹ und R²² gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist,
A ―O―, ―S―, 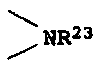 oder 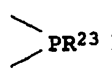 bedeuten,
mit
R²³ C₁- bis C₁₀-Alkyl, C₆- bis C₁₅-Aryl,
C₃- bis C₁₀-Cycloalkyl, C₇- bis C₁₈-Alkylaryl oder Si(R²⁴)₃,
R²⁴ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁸ und R¹⁶ gemeinsam eine Gruppierung -R¹⁹- bilden,
und als oligomere Aluminiumoxidverbindungen C) offenkettige oder cyclische Alumoxanverbindungen der allgemeinen Formel IV oder V verwendet werden, 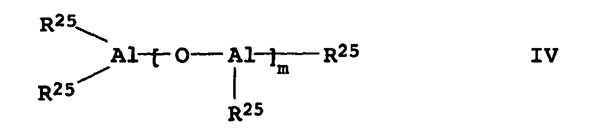 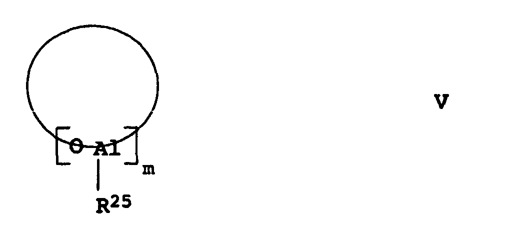 wobei
R²⁵ eine C₁- bis C₄-Alkylgruppe bedeutet und m für eine ganze Zahl von 5 bis 30 steht.

5. Verfahren zur Herstellung von Katalysatorsystemen nach den Ansprüchen 1 bis 4, wobei das atomare Verhältnis zwischen Aluminium aus den oligomeren Aluminiumoxidverbindungen C) und dem Metall der IV. und V. Nebengruppe des Periodensystems aus dem Metallocenkomplex B) im Bereich von 10:1 bis 10⁶:1 liegt.

6. Verfahren zur Herstellung von Katalysatorsystemen nach den Ansprüchen 1 bis 5, wobei das atomare Verhältnis zwischen Bor aus der oder den Borverbindung(en) D) und dem Aluminium aus den oligomeren Aluminiumoxidverbindungen C) im Bereich von 10⁻⁴:1 bis 1:1 liegt.

7. Verfahren zur Herstellung von Katalysatorsystemen nach den Ansprüchen 1 bis 6, wobei als weitere Komponente E) noch eine Metallverbindung der allgemeinen Formel VI verwendet wird,
M² (R²⁶)ᵣ (R²⁷)ₛ (R²⁸)ₜ VI
in der
M² ein Alkali-, ein Erdalkalimetall oder ein Metall der III. Hauptgruppe des Periodensystems, d.h. Bor, Aluminium, Gallium, Indium oder Thallium bedeutet,
R²⁶ Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
R²⁷ und R²⁸ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M² entspricht.

## Claims

1. A process for preparing catalyst systems for polymerizing C₂-C₁₂-alk-1-enes which comprises
A) an organic or inorganic support,
B) at least one metallocene complex,
C) oligomeric aluminum oxide compounds and
D) at least one boron compound of the formula I 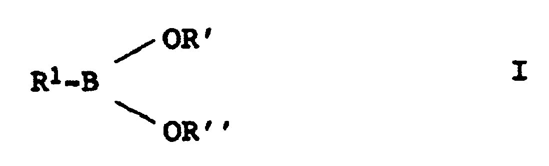 or a cyclic boron compound of the formula II 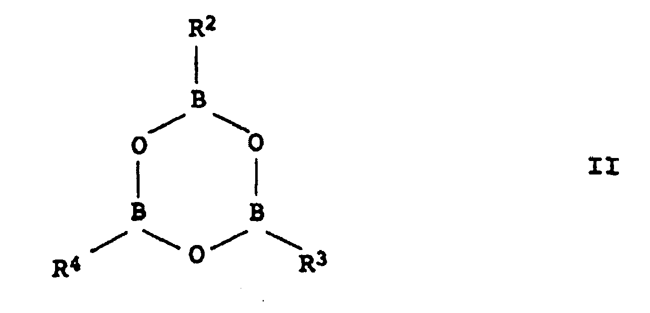 or mixtures of boron compounds I and II,
where, in the formulae I and II, the substituents have the following meanings:
R¹ to R⁴ are each a C₁-C₂₀-alkyl group which may bear halogen atoms, C₆-C₁₅-aryl groups and/or C₁-C₁₀-alkoxy groups as substituents,
a C₄-C₇-cycloalkyl group which may bear halogen atoms, C₁-C₁₀-alkyl groups and/or C₁-C₁₀-alkoxy groups as substituents,
a C₁-C₁₀-alkoxy or alkyl sulfide group which may bear halogen atoms, C₁-C₁₀₋alkyl groups and/or C₆-C₁₅-aryl groups as substituents,
a C₆-C₁₅-aryl group which may bear halogen atoms, C₁-C₁₀-alkyl groups, C₁₋C₁₀-haloalkyl groups, C₉-C₁₀-cycloalkyl groups, C₆-C₁₅-aryl groups, C₁-C₁₀-alkenyl groups, amino groups, monoalkylamino or dialkylamino groups, nitro groups, formyl groups, acetamido groups and/or C₁-C₁₀-alkoxy groups as substituents or
a saturated or unsaturated C₃-C₁₅₋heterocycle which comprises from one to three oxygen, sulfur and/or nitrogen atoms in the ring system and may bear halogen atoms, C₆-C₁₅-aryl groups, further C₃-C₁₅-heterocycles and/or C₁-C₁₀₋alkyl groups as substituents,
furthermore, R¹ to R⁴ are as defined above and additionally bear from one to three further B (OR') (OR'') groups or, if R¹ to R⁴ comprise an aromatic ring, this is part of a metallocene system,
R' and R" are identical or different and are each hydrogen or a C₁-C₁₀-alkyl group, wherein the components A), B) and C) are first combined, and the boron compound(s) D) of the formula I or II or a mixture of I or II are then added.

2. The process for preparing catalysts system according to claim 1, wherein the support A) used is an oxide of silicon, of aluminum, of titanium or an oxide of a metal of main group I or II of the Periodic Table.

3. The process for preparing catalyst systems according to claim 2, wherein the support A) used is silica gel (SiO₂).

4. The process for preparing catalyst systems according to any of claims 1 to 3, wherein the metallocene complex B) used is a metallocene complex of the formula III 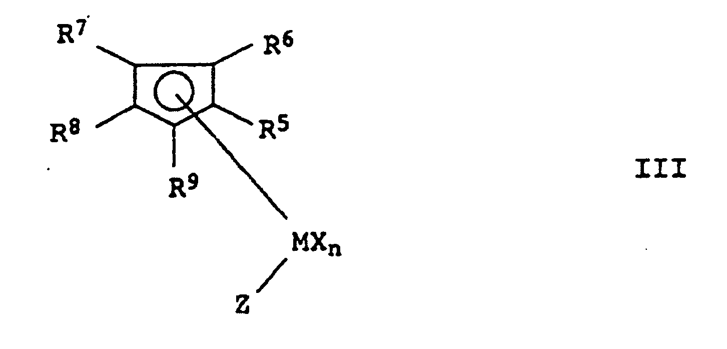 where the substituents have the following meanings:
M is titanium, zirconium, hafnium, vanadium, niobium or tantalum, or an element of transition group III of the Periodic Table or the lanthanides,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical,-OR¹⁰ or -NR¹⁰R¹¹,
n is 1, 2 or 3, where n corresponds to the valence of M minus 2,
where
R¹⁰ and R¹¹ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R⁵ to R⁹ are hydrogen, C₁-C₁₀-alkyl, 5- to 7-membered cycloalkyl which in turn may bear C₁-C₁₀-alkyls as substituents, C₆₋C₁₅-aryl or arylalkyl, where two adjacent radicals may also together form a saturated or unsaturated cyclic group having from 4 to 15 carbon atoms, or Si(R¹²)₃ where
R¹² can be C₁-C₁₀-alkyl, C₃-C₁₀-cycloalkyl or C₆-C₁₅-aryl and
Z is X or 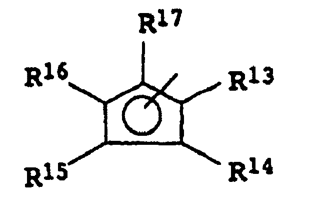
where the radicals
R¹³ to R¹⁷ are hydrogen, C₁-C₁₀-alkyl, 5- to 7-membered cycloalkyl which in turn may bear C₁-C₁₀-alkyls as substituents, C₆₋C₁₅-aryl or arylalkyl and two adjacent radicals may together form a saturated or unsaturated cyclic group having from 4 to 15 carbon atoms, or Si(R¹⁸)₃ where
R¹⁸ is C₁-C₁₀-alkyl, C₆-C₁₅-aryl or C₃-C₁₀₋cycloalkyl,
or the radicals R⁸ and Z together form a group - R¹⁹-A- where
R¹⁹ 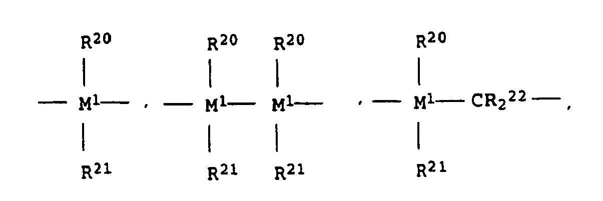 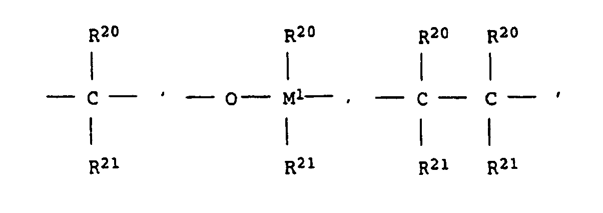 = BR²⁰, = AlR²⁰, -Ge-, -Sn-, -O-, -S-, = SO, = SO₂, = NR²⁰, = CO, = PR²⁰ or = P(O)R²⁰,
where
R²⁰, R²¹ and R²² are identical or different and are each a hydrogen atom, a halogen atom, a C₁-C₁₀-alkyl group, a C₁-C₁₀-fluoralkyl group, a C₆-C₁₀-fluoraryl group, a C₆-C₁₀₋aryl group, a C₁-C₁₀-alkoxy group, a C₂₋C₁₀-alkenyl group, a C₇-C₄₀-arylalkyl group, a C₈-C₄₀-arylalkenyl group or a C₇₋C₄₀-alkylaryl group or two adjacent radicals together with the atoms connecting them form a saturated or unsaturated ring having from 4 to 15 carbon atoms, and
M¹ is silicon, germanium or tin,
A is ―o―, ―s―, 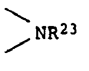 or 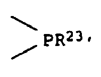
where
R²³ is C₁-C₁₀-alkyl, C₆-C₁₅-aryl, C₃-C₁₀₋cycloalkyl, C₇-C₁₈-alkylaryl or Si (R²⁴)₃,
R²⁴ is hydrogen, C₁-C₁₀-alkyl, C₆-C₁₅-aryl which in turn may bear C₁-C₄-alkyl groups as substituents or C₃-C₁₀-cycloalkyl
or the radicals R⁸ and R¹⁶ together form a group -R¹⁹-,
and the oligomeric aluminum oxide compounds C) used are open- chain or cyclic aluminoxane compounds of the formula IV or V, 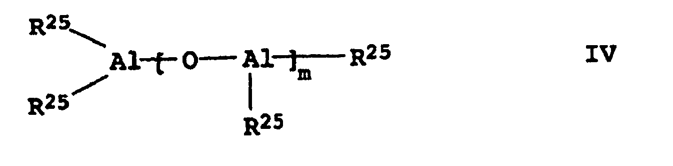 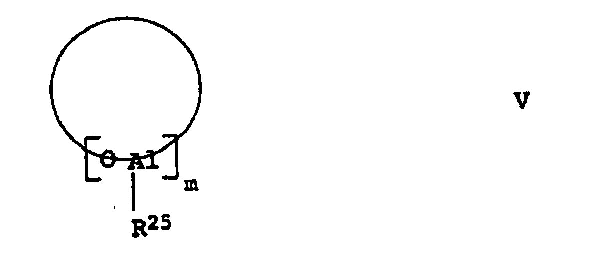 where
R²⁵ is a C₁-C₄-alkyl group and m is an integer from 5 to 30.

5. The process for preparing catalyst systems according to any of claims 1 to 4, wherein the atomic ratio of aluminum from the oligomeric aluminum oxide compounds C) to the metal of transition group IV or V of the Periodic Table from the metallocene complex B) is in the range from 10:1 to 10⁶:1.

6. The process for preparing catalyst systems according to any of claims 1 to 5, wherein the atomic ratio of boron from the boron compound(s) D) to the aluminum from the oligomeric aluminum oxide compounds C) is in the range from 10⁻⁴:1 to 1:1.

7. The process for preparing catalyst systems according to any of claims 1 to 6 which further comprises, as additional component E), a metal compound of the formula VI
M²(R²⁶)ᵣ (R²⁷)ₛ (R²⁸)ₜ VI
where
M² is an alkali metal, an alkaline earth metal or a metal of main group III of the Periodic Table, i.e. boron, aluminum, gallium, indium or thallium,
R²⁶ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R²⁷ and R²⁸ are hydrogen, halogen, C₁-C₁₀-alkyl, C₆₋C₁₅-aryl, alkylaryl, arylalkyl or alkoxy each having from 1 to 10 carbon atoms in the alkyl radical and from 6 to 20 carbon atoms in the aryl radical,
r is an integer from 1 to 3
and
s and t are integers from 0 to 2, where the sum r+s+t corresponds to the valence of M².

## Revendications

1. Procédé de préparation de systèmes de catalyseur pour la polymérisation d'alc-1-ènes en C₂ à C₁₂, comprenant :
A) un support organique ou inorganique,
B) au moins un complexe de métallocène,
C) des composés d'oxyde d'aluminium oligomères et
D) au moins un composé de bore de formule générale I 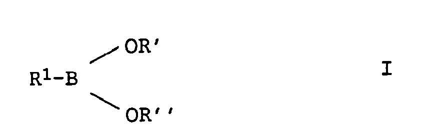
ou un composé de bore cyclique de formule générale II 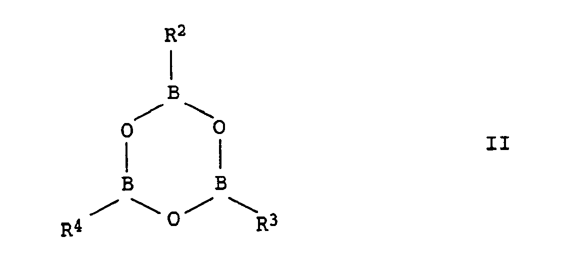 ou des mélanges des composés de bore I et II, où, dans les formules I et II, les substituants ont la signification suivante :
R¹ à R⁴ représentent :
un groupe alkyle en C₁ à C₂₀, qui peut être substitué par des atomes d'halogène, des groupes aryle en C₆ à C₁₅ et/ou des groupes alcoxy en C₁ à C₁₀,
un groupe cycloalkyle en C₄ à C₇, qui peut être substitué par des atomes d'halogène, des groupes alkyle en C₁ à C₁₀ et/ou des groupes alcoxy en C₁ à C₁₀,
un groupe alcoxy ou alkylsulfure en C₁ à C₁₀, qui peut être substitué par des atomes d'halogène, des groupes alkyle en C₁ à C₁₀ et/ou des groupes aryle en C₆ à C₁₅,
un groupe aryle en C₆ à C₁₅, qui peut être substitué par des atomes d'halogène, des groupes alkyle en C₁ à C₁₀, des groupes halogénoalkyle en C₁ à C₁₀, des groupes cycloalkyle en C₄ à C₁₀, des groupes aryle en C₆ à C₁₅, des groupes alcényle en C₁ à C₁₀, des groupes amino, des groupes monoalkylamino ou dialkylamino, des groupes nitro, des groupes formyle, des groupes acétamido et/ou des groupes alcoxy en C₁ à C₁₀ ou
un hétérocycle en C₃ à C₁₅ saturé ou insaturé, qui comprend dans le système cyclique un à trois atomes d'oxygène, de soufre et/ou d'azote, et qui peut être substitué par des atomes d'halogènes, des groupes aryle en C₆ à C₁₅, d'autres hétérocycles en C₃ à C₁₅ et/ou des groupes alkyle en C₁ à C₁₀,
R¹ à R⁴ étant en outre tels que définis dans ce qui précèdent; et portant en plus un à trois autres groupements B(OR')(OR") ou si R¹ à R⁴ comprennent un cycle aromatique, cette partie étant un système métallocène,
R' à R" sont identiques ou différents et représente chacun un atome d'hydrogène ou un groupe alkyle en C₁ à C₁₀,
**caractérisé en ce que** l'on rassemble d'abord les composants A), B) et C) et que l'on ajoute ensuite le ou les composés de bore D) de formule générale I ou II ou un mélange de I ou II.

2. Procédé de préparation de systèmes de catalyseur selon la revendication 1, dans lequel on utilise comme support A) un oxyde de silicium, d'aluminium, de titane ou un oxyde d'un métal du groupe principal I ou II du tableau périodique des éléments.

3. Procédé de préparation de systèmes de catalyseur selon la revendication 2, dans lequel on utilise comme support A) du gel de silice (SiO₂).

4. Procédé de préparation de systèmes catalyseur selon les revendications 1 à 3, dans lequel on utilise comme complexe de métallocène B) un complexe de métallocène de formule générale III, 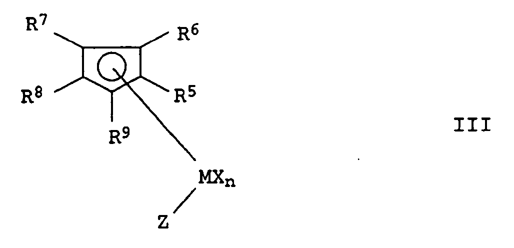 dans laquelle les substituants ont la signification suivante :
M représente le titane, le zirconium, le hafnium, le vanadium, le niobium ou le tantale ainsi que des éléments du groupe secondaire III du tableau périodique des éléments et les lanthanoïdes,
X représente un atome de fluor, de chlore, de brome, d'iode, d'hydrogène, un alkyle en C₁ à C₁₀, un aryle en C₆ à C₁₅, un alkylaryle avec 1 à 10 atomes de C dans le radical alkyle et 6 à 20 atomes de C dans le radical aryle, -OR¹⁰ ou -NR¹⁰R¹¹,
n représente 1, 2 ou 3, n correspondant à la valence de M moins le nombre 2,
où
R¹⁰ et R¹¹ représentent un alkyle en C₁ à C₁₀, un aryle en C₆ à C₁₅, un alkylaryle, un arylalkyle, un fluoroalkyle ou un fluoroaryle avec à chaque fois 1 à 10 atomes de C dans le radical alkyle et 6 à 20 atomes de C dans le radical aryle,
R⁵ à R⁹ représentent un atome d'hydrogène, un alkyle en C₁ à C₁₀, un cycloalkyle de 5 à 7 éléments, qui peut être pour sa part substitué par un alkyle en C₁ à C₁₀, un aryle ou un arylalkyle en C₆ à C₁₅, deux radicaux adjacents pouvant représenter conjointement des groupes cycliques saturés ou insaturés présentant 4 à 15 atomes de C, ou Si(R¹²)₃ avec
R¹² pouvant être un alkyle en C₁ à C₁₀, un cycloalkyle en C₃ à C₁₀ ou un aryle en C₆ à C₁₅ et
Z représente X ou 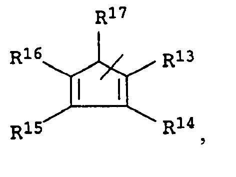
dans laquelle les radicaux
R¹³ à R¹⁷ représentent un atome d'hydrogène, un alkyle en C₁ à C₁₀, un cycloalkyle de 5 à 7 éléments, qui peut être pour sa part substitué par un alkyle en C₁ à C₁₀, un aryle ou un arylalkyle en C₆ à C₁₅, et deux radicaux adjacents pouvant représenter conjointement des groupes cycliques saturés ou insaturés présentant 4 à 15 atomes de C, ou Si(R¹⁸)₃ avec
R¹⁸ pouvant être un alkyle en C₁ à C₁₀, un aryle en C₆ à C₁₅ ou un cycloalkyle en C₃ à C₁₀
ou les radicaux R⁸ et Z forment conjointement un groupement -R¹⁹-A-, dans lequel
R¹⁹ représente R¹⁹ 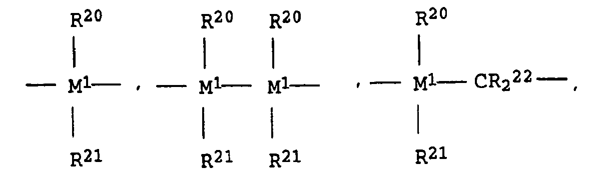 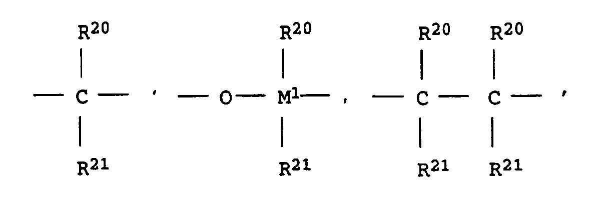 = BR²⁰, = AlR²⁰, -Ge-, -Sn-, -O-, -S-, =SO, =SO₂, =NR²⁰ = CO, =PR²⁰ ou = P(O)R²⁰,
où
R²⁰, R²¹ et R²² sont identiques ou différents et représentent respectivement un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₂ à C₁₀, un groupe arylalkyle en C₇ à C₄₀, un groupe arylalcényle en C₈ à C₄₀, ou un groupe alkylaryle en C₇ à C₄₀, ou deux radicaux adjacents formant respectivement avec les atomes les reliant un cycle saturé ou insaturé présentant 4 à 15 atomes de C, et
M¹ représente le silicium, le germanium ou l'étain,
A représente -O-, -S-, 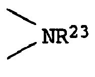 ou 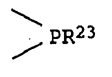
avec
R²³ représente un alkyle en C₁ à C₁₀, un aryle en C₆ à C₁₅, un cycloalkyle en C₃ à C₁₀, un alkylaryle en C₇ à C₁₈, ou Si(R²⁴)₃,
R²⁴ représente un atome d'hydrogène, un alkyle en C₁ à C₁₀, un aryle en C₆ à C₁₅, qui peut être pour sa part substitué par des groupes alkyle en C₁ à C₄, ou un cycloalkyle en C₃ à C₁₀,
ou les radicaux R⁸ et R¹⁶ forment conjointement un groupement -R¹⁹-,
et l'on utilise comme composés d'oxyde d'aluminium oligomères C) des composés aluminoxane à chaîne ouverte ou cyclique, de formule générale IV ou V, 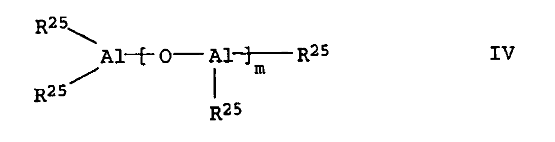 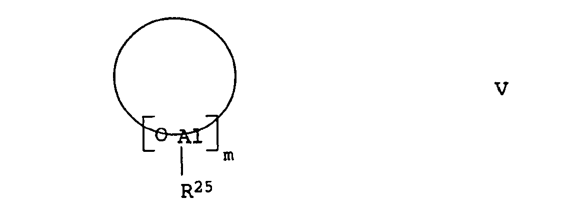 dans laquelle
R²⁵ représente un groupe alkyle en C₁ à C₄ et m représente un nombre entier de 5 à 30.

5. Procédé de préparation de systèmes de catalyseur selon les revendications 1 à 4, dans lequel le rapport atomique entre l'aluminium provenant des composés d'oxyde d'aluminium oligomères C) et le métal des groupes secondaires IV et V du tableau périodique des éléments provenant du complexe métallocène B) se situe dans la plage allant de 10 : 1 à 10⁶: 1.

6. Procédé de préparation de systèmes de catalyseur selon les revendications 1 à 5, dans lequel le rapport atomique entre le bore provenant du ou des composés de bore D) et l'aluminium provenant des composés d'oxyde d'aluminium oligomères C) se situe dans la plage allant de 10⁻⁴: 1 à 1 : 1.

7. Procédé de préparation de systèmes de catalyseur selon les revendications 1 à 6, dans lequel on utilise comme autres composants E) encore un composé métallique de formule générale VI,
M² (R²⁶)ᵣ (R²⁷)ₛ (R²⁸)ₜ VI
dans laquelle
M² représente un métal alcalin ou alcalino-terreux ou un métal du groupe principal III du tableau périodique des éléments, c'est-à-dire le bore, l'aluminium, le gallium, l'indium ou le thallium,
R²⁶ représente un atome d'hydrogène, un alkyle en C₁ à C₁₀, un aryle en C₆ à C₁₅, un alkylaryle ou un arylalkyle, avec à chaque fois 1 à 10 atomes de C dans le radical alkyle et 6 à 20 atomes de C dans le radical aryle,
R²⁷ et R²⁸ représentent un atome d'hydrogène, un atome d'halogène, un alkyle en C₁ à C₁₀, un aryle en C₆ à C₁₅, un alkylaryle, un arylalkyle, ou un alcoxy, avec à chaque fois 1 à 10 atomes de C dans le radical alkyle et 6 à 20 atomes de C dans le radical aryle,
r représente un nombre entier de 1 à 3,
et
s et t représentent des nombres entiers de 0 à 2, la somme r+s+t correspondant à la valence de M².
